# EUROPEAN PATENT APPLICATION

(11) **EP 4 615 101 A1**
(43) Date of publication of application: **10.09.2025**
(21) Application number: 23902545.5
(22) Date of filing: 05.12.2023
(51) Int. Cl.: H04W 72/0446, H04W 52/02

(54) **COMMUNICATION METHOD AND APPARATUS**

(30) Priority: 15.12.2022 CN 202211614814; 19.01.2023 CN 202310125142
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN)
(74) Representative: Gill Jennings & Every LLP
(86) International application number: PCT/CN2023/136472
(87) International publication number: WO 2024/125348

(57) **Abstract**

Embodiments of this application provide a communication method and apparatus. The method includes: A terminal device receives resource configuration information from a network device, where the resource configuration information indicates a time domain resource of a low power wake up signal LP-WUS, and the LP-WUS is used to wake up the terminal device. The terminal device may receive the LP-WUS from the network device on the time domain resource or a part of the time domain resource. According to the solutions provided in embodiments of this application, the time domain resource of the LP-WUS can be determined, and power consumption can be reduced.

## Description

This application claims priorities to Chinese Patent Application No. 202211614814.5, filed with the China National Intellectual Property Administration on December 15, 2022 and entitled "LP-WUS RESOURCE CONFIGURATION METHOD", and to Chinese Patent Application No. 202310125142.X, filed with the China National Intellectual Property Administration on January 19, 2023 and entitled "COMMUNICATION METHOD AND APPARATUS", which are incorporated herein by reference in their entireties.

### TECHNICAL FIELD

Embodiments of this application relate to the communication field, and more specifically, to a communication method and apparatus.

### BACKGROUND

When a terminal device is in an idle/inactive (IDLE/INACTIVE) state, the terminal device may obtain a position of a paging frame (paging frame, PF) and a position of a paging occasion (paging occasion, PO) in the PF, and the terminal device may receive paging on the PO.

To reduce power consumption of the terminal device, a separate low-power-consumption circuit may be used to receive a paging-related message. The circuit may be referred to as a wake up circuit, and a signal received by the wake up circuit may be referred to as a low power wake up signal (low power wake up signal, LP-WUS). How to determine a transmission resource of the LP-WUS is an urgent problem to be resolved currently.

### SUMMARY

Embodiments of this application provide a communication method and apparatus, to determine a time domain resource of an LP-WUS, and reduce power consumption.

According to a first aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: The terminal device receives first resource configuration information from a network device, where the first resource configuration information indicates a first time domain resource of a low power wake up signal LP-WUS, and the LP-WUS is used to wake up the terminal device. The terminal device receives the LP-WUS from the network device on all or a part of the first time domain resource.

Based on the foregoing solution, the terminal device may determine the first time domain resource of the LP-WUS based on the first resource configuration information, and receive the LP-WUS on all or the part of the determined first time domain resource. Compared with a solution in which the terminal device does not determine a time domain resource of the LP-WUS and continuously monitors the LP-WUS in the conventional technology, the solution in this embodiment can reduce power consumption of the terminal device.

With reference to the first aspect, in some implementations of the first aspect, the first resource configuration information indicates a periodicity of the first time domain resource and a time domain position of the first time domain resource in the periodicity.

Based on the foregoing solution, the terminal device may periodically monitor the LP-WUS based on the periodicity indicated by the first resource configuration information and the specific time domain position of the first time domain resource in the periodicity. This prevents the terminal device from determining different time domain resources by using a plurality of pieces of resource configuration information, so that signaling overheads of the resource configuration information can be reduced.

With reference to the first aspect, in some implementations of the first aspect, the time domain position includes a start position of the first time domain resource.

Based on the foregoing solution, the terminal device may start to receive the LP-WUS at the start position indicated by the first resource configuration information. This helps further reduce power consumption of the terminal device.

With reference to the first aspect, in some implementations of the first aspect, the first resource configuration information further indicates a length of the first time domain resource.

Based on the foregoing solution, the terminal device may start to receive the LP-WUS at the start position indicated by the first resource configuration information, and receiving duration is the length of the first time domain resource. In this way, power consumption of the terminal device can be further reduced.

With reference to the first aspect, in some implementations of the first aspect, the time domain position is indicated by using a bitmap, and a granularity of the first time domain resource indicated by the bitmap is any one of the following: a time domain symbol, a slot, a frame, a subframe, a time domain symbol group, a slot group, a frame group, or a subframe group, where the time domain symbol group includes at least two time domain symbols, the slot group includes at least two slots, the frame group includes at least two frames, and the subframe group includes at least two subframes.

Based on the foregoing solution, a non-contiguous first time domain resource may be indicated by using the bitmap, so that flexibility of configuring the first time domain resource can be improved.

With reference to the first aspect, in some implementations of the first aspect, the first time domain resource is a time domain resource of at least one of the following: a synchronization signal and physical broadcast channel block SSB, a control resource set CORESET 0, or a tracking reference signal TRS.

Based on the foregoing solution, the terminal device may determine the first time domain resource of the LP-WUS based on time domain resource configuration information of one or more of the SSB, the CORESET 0, or the TRS, so that signaling overheads of the resource configuration information can be reduced.

With reference to the first aspect, in some implementations of the first aspect, the method further includes: The terminal device receives second resource configuration information from the network device, where the second resource configuration information indicates a first quantity and/or a length of a second time domain resource, the first quantity is used to determine a start position of the second time domain resource, and the second time domain resource is a part of the first time domain resource. The terminal device receives the LP-WUS from the network device on the second time domain resource.

Based on the foregoing solution, the terminal device may further determine the second time domain resource in the first time domain resource, and receive the LP-WUS on the second time domain resource. In other words, in this solution, monitoring duration of the terminal device can be reduced, and power consumption of the terminal device can be further reduced.

With reference to the first aspect, in some implementations of the first aspect, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

With reference to the first aspect, in some implementations of the first aspect, the method further includes: The terminal device determines a valid resource set of the first time domain resource. The terminal device receives third resource configuration information from the network device, where the third resource configuration information indicates a second quantity and/or a length of a third time domain resource in the valid resource set, the second quantity is used to determine a start position of the third time domain resource, and the third time domain resource corresponds to a second time domain resource in the first time domain resource. The terminal device receives the LP-WUS from the network device on the second time domain resource.

Based on the foregoing solution, the terminal device may further determine the second time domain resource in the first time domain resource, and receive the LP-WUS on the second time domain resource. In other words, in this solution, monitoring duration of the terminal device can be reduced, and power consumption of the terminal device can be further reduced.

With reference to the first aspect, in some implementations of the first aspect, the second quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

With reference to the first aspect, in some implementations of the first aspect, the method further includes: The terminal device receives fourth resource configuration information from the network device, where the fourth resource configuration information indicates an offset value list, and the offset value list includes at least one offset value, or the fourth resource configuration information indicates an offset value list and a length of a second time domain resource, the offset value list includes a first offset value, the first offset value is used to determine a start position of the second time domain resource, and the second time domain resource is a part of the first time domain resource. The terminal device receives the LP-WUS from the network device on the second time domain resource.

Based on the foregoing solution, the terminal device may further determine the second time domain resource in the first time domain resource, and receive the LP-WUS on the second time domain resource. In other words, in this solution, monitoring duration of the terminal device can be reduced, and power consumption of the terminal device can be further reduced. In addition, when the fourth resource configuration information indicates the offset value list and the length of the second time domain resource, the offset value in the offset value list may be associated with the length of the second time domain resource, so that signaling overheads of indicating the offset value list can be reduced.

According to a second aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: T terminal device receives fifth resource configuration information from a network device, where the fifth resource configuration information indicates a first quantity, and a length and a periodicity of a second time domain resource, and the first quantity is used to determine a start position of the second time domain resource. The terminal device receives an LP-WUS from the network device on the second time domain resource, where the LP-WUS is used to wake up the terminal device.

Based on the foregoing solution, the terminal device may determine the length, the start position, and the periodicity of the second time domain resource. In other words, the terminal device may more accurately determine an occasion for receiving the LP-WUS, so that power consumption of the terminal device can be reduced.

With reference to the second aspect, in some implementations of the second aspect, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

According to a third aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: The terminal device receives sixth resource configuration information from a network device, where the sixth resource configuration information indicates a periodicity and an offset value list of a second time domain resource, the offset value list includes at least one offset value, the offset value list includes a first offset value, and the first offset value is used to determine a start position of the second time domain resource. The terminal device receives an LP-WUS from the network device on the second time domain resource, where the LP-WUS is used to wake up the terminal device.

Based on the foregoing solution, the terminal device may determine the start position and the periodicity of the second time domain resource, and duration of the second time domain resource may be determined based on the offset value in the offset value list. In other words, the terminal device may more accurately determine an occasion for receiving the LP-WUS, so that power consumption of the terminal device can be reduced.

With reference to the third aspect, in some implementations of the third aspect, the sixth resource configuration information further indicates a length of the second time domain resource.

Based on the foregoing solution, when the fourth resource configuration information further indicates the length of the second time domain resource, the offset value in the offset value list may be associated with the length of the second time domain resource, so that signaling overheads of indicating the offset value list by the fourth resource configuration information can be reduced.

According to a fourth aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device sends first resource configuration information to a terminal device, where the first resource configuration information indicates a first time domain resource of an LP-WUS, and the LP-WUS is used to wake up the terminal device. The network device sends the LP-WUS to the terminal device on all or a part of the first time domain resource.

Based on the foregoing solution, the network device may indicate the first time domain resource of the LP-WUS to the terminal device by using the first resource configuration information, so that the terminal device can determine to receive, on all or the part of the first time domain resource, the LP-WUS sent by the network device. Compared with a solution in which the terminal device does not determine a time domain resource of the LP-WUS and continuously monitors the LP-WUS in the conventional technology, the solution in this embodiment can reduce power consumption of the terminal device. In addition, the network device may appropriately plan the time domain resource from a perspective of the network device, and centralize the time domain resource of the LP-WUS and a time domain resource of another signal as much as possible. This helps the network device sleep, so that power consumption of the network device can be reduced.

With reference to the fourth aspect, in some implementations of the fourth aspect, the first resource configuration information indicates a periodicity of the first time domain resource and a time domain position of the first time domain resource in the periodicity.

Based on the foregoing solution, the network device indicates the periodicity and the specific time domain position of the first time domain resource in the periodicity by using the first resource configuration information, so that the terminal device can periodically monitor the LP-WUS. This prevents the network device from indicating different time domain resources by using a plurality of pieces of resource configuration information, so that signaling overheads of the resource configuration information can be reduced.

With reference to the fourth aspect, in some implementations of the fourth aspect, the time domain position includes a start position of the first time domain resource.

Based on the foregoing solution, the network device may indicate, by using the first resource configuration information, the start position at which the terminal device receives the LP-WUS. This helps further reduce power consumption of the terminal device.

With reference to the fourth aspect, in some implementations of the fourth aspect, the first resource configuration information further indicates a length of the first time domain resource.

Based on the foregoing solution, the network device may further indicate, by using the first resource configuration information, duration for receiving the LP-WUS by the terminal device. In this way, power consumption of the terminal device can be further reduced.

With reference to the fourth aspect, in some implementations of the fourth aspect, the time domain position is indicated by using a bitmap, and a granularity of the first time domain resource indicated by the bitmap is any one of the following: a time domain symbol, a slot, a frame, a subframe, a time domain symbol group, a slot group, a frame group, or a subframe group, where the time domain symbol group includes at least two time domain symbols, the slot group includes at least two slots, the frame group includes at least two frames, and the subframe group includes at least two subframes.

Based on the foregoing solution, the network device may indicate a non-contiguous first time domain resource by using the bitmap, so that flexibility of configuring the first time domain resource can be improved.

With reference to the fourth aspect, in some implementations of the fourth aspect, the first time domain resource is a time domain resource of at least one of the following: an SSB, a CORESET 0, or a TRS.

Based on the foregoing solution, the network device may reuse time domain resource configuration information of one or more of the SSB, the CORESET 0, or the TRS to indicate the first time domain resource of the LP-WUS, so that signaling overheads of the resource configuration information can be reduced.

With reference to the fourth aspect, in some implementations of the fourth aspect, the method further includes: The network device sends second resource configuration information to the terminal device, where the second resource configuration information indicates a first quantity and/or a length of a second time domain resource, the first quantity is used to determine a start position of the second time domain resource, and the second time domain resource is a part of the first time domain resource. The network device sends the LP-WUS to the terminal device on the second time domain resource.

Based on the foregoing solution, the network device may further indicate, by using the second resource configuration information, the second time domain resource on which the terminal device receives the LP-WUS in the first time domain resource. In other words, in this solution, monitoring duration of the terminal device can be reduced, and power consumption of the terminal device can be further reduced.

With reference to the fourth aspect, in some implementations of the fourth aspect, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

With reference to the fourth aspect, in some implementations of the fourth aspect, the method further includes: The network device determines a valid resource set of the first time domain resource. The network device sends third resource configuration information to the terminal device, where the third resource configuration indicates a second quantity and/or a length of a third time domain resource in the valid resource set, the second quantity is used to determine a start position of the third time domain resource, and the third time domain resource corresponds to a second time domain resource in the first time domain resource. The network device sends the LP-WUS to the terminal device on the second time domain resource.

Based on the foregoing solution, the network device may further indicate, by using the third resource configuration information, the second time domain resource on which the terminal device receives the LP-WUS in the first time domain resource. In other words, in this solution, monitoring duration of the terminal device can be reduced, and power consumption of the terminal device can be further reduced.

With reference to the fourth aspect, in some implementations of the fourth aspect, the second quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

With reference to the fourth aspect, in some implementations of the fourth aspect, the method further includes: The network device sends fourth resource configuration information to the terminal device, where the fourth resource configuration information indicates an offset value list, and the offset value list includes at least one offset value, or the fourth resource configuration information indicates an offset value list and a length of a second time domain resource, the offset value list includes a first offset value, the first offset value is used to determine a start position of the second time domain resource, and the second time domain resource is a part of the first time domain resource. The network device sends the LP-WUS to the terminal device on the second time domain resource.

Based on the foregoing solution, the network device may further indicate, by using the fourth resource configuration information, the second time domain resource on which the terminal device receives the LP-WUS in the first time domain resource. In other words, in this solution, monitoring duration of the terminal device can be reduced, and power consumption of the terminal device can be further reduced. In addition, when the fourth resource configuration information indicates the offset value list and the length of the second time domain resource, the offset value in the offset value list may be associated with the length of the second time domain resource, so that signaling overheads of indicating the offset value list can be reduced.

According to a fifth aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device sends fifth resource configuration information to a terminal device, where the fifth resource configuration information indicates a first quantity, and a length and a periodicity of a second time domain resource, and the first quantity is used to determine a start position of the second time domain resource. The network device sends an LP-WUS to the terminal device on the second time domain resource, where the LP-WUS is used to wake up the terminal device.

Based on the foregoing solution, the terminal device may more accurately determine, based on an indication of the network device, an occasion for receiving the LP-WUS, so that power consumption of the terminal device can be reduced.

With reference to the fifth aspect, in some implementations of the fifth aspect, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

According to a sixth aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device sends sixth resource configuration information to a terminal device, where the sixth resource configuration information indicates a periodicity and an offset value list of a second time domain resource, the offset value list includes at least one offset value, the offset value list includes a first offset value, and the first offset value is used to determine a start position of the second time domain resource. The network device sends an LP-WUS to the terminal device on the second time domain resource, where the LP-WUS is used to wake up the terminal device.

Based on the foregoing solution, the terminal device may determine the start position and the periodicity of the second time domain resource based on an indication of the network device, and duration of the second time domain resource may be determined based on the offset value in the offset value list. In other words, the terminal device may more accurately determine an occasion for receiving the LP-WUS, so that power consumption of the terminal device can be reduced.

With reference to the sixth aspect, in some implementations of the sixth aspect, the sixth resource configuration information further indicates a length of the second time domain resource.

Based on the foregoing solution, when the fourth resource configuration information further indicates the length of the second time domain resource, the offset value in the offset value list may be associated with the length of the second time domain resource, so that signaling overheads of indicating the offset value list by the fourth resource configuration information can be reduced.

According to a seventh aspect, a communication apparatus is provided. The apparatus is configured to perform the method according to any one of the possible implementations of the first aspect to the third aspect, or perform the method according to any one of the possible implementations of the fourth aspect to the sixth aspect. Specifically, the apparatus may include units and/or modules, for example, a processing unit and/or a transceiver unit, configured to perform the method according to any one of the possible implementations of the first aspect to the third aspect, or any one of the possible implementations of the fourth aspect to the sixth aspect.

In an implementation, the apparatus is a communication device (for example, a terminal device or a network device). When the apparatus is the communication device, a communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, a communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method according to any one of the possible implementations of the first aspect to the third aspect, or perform the method according to any one of the possible implementations of the fourth aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device or a network device).

According to a ninth aspect, a processor is provided, and is configured to perform the method according to any one of the possible implementations of the first aspect to the third aspect, or perform the method according to any one of the possible implementations of the fourth aspect to the sixth aspect.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to a tenth aspect, a communication system is provided, including the terminal device and the network device described above.

According to an eleventh aspect, a computer-readable storage medium is provided. The computer-readable storage medium stores program code executed by user equipment, and the program code is used to perform the method according to any one of the possible implementations of the first aspect to the third aspect, or perform the method according to any one of the possible implementations of the fourth aspect to the sixth aspect.

According to a twelfth aspect, a computer program product including instructions is provided. When the computer program product runs on a computer, the computer is enabled to perform the method according to any one of the possible implementations of the first aspect to the third aspect, or perform the method according to any one of the possible implementations of the fourth aspect to the sixth aspect.

### BRIEF DESCRIPTION OF DRAWINGS

FIG. 1 is a diagram of a communication system according to an embodiment of this application;
FIG. 2 is a working diagram of a wake up circuit in a terminal device according to an embodiment of this application;
FIG. 3 is a diagram of a waveform of OOK modulation according to an embodiment of this application;
FIG. 4 is a diagram of a waveform of OFDM modulation according to an embodiment of this application;
FIG. 5 is a diagram of a waveform of FSK modulation according to an embodiment of this application;
FIG. 6 is a schematic flowchart of a communication method 600 according to an embodiment of this application;
FIG. 7 and FIG. 8 are diagrams of distribution of a first time domain resource according to embodiments of this application;
FIG. 9 to FIG. 11 are diagrams of distribution of a second time domain resource in a first time domain resource according to embodiments of this application;
FIG. 12 is another schematic flowchart of a communication method 1200 according to an embodiment of this application;
FIG. 13 is still another schematic flowchart of a communication method 1300 according to an embodiment of this application;
FIG. 14 is a diagram of a structure of a communication apparatus 1400 according to an embodiment of this application; and
FIG. 15 is a diagram of a structure of a communication apparatus 1500 according to an embodiment of this application.

### DESCRIPTION OF EMBODIMENTS

The following describes the technical solutions in embodiments of this application with reference to the accompanying drawings.

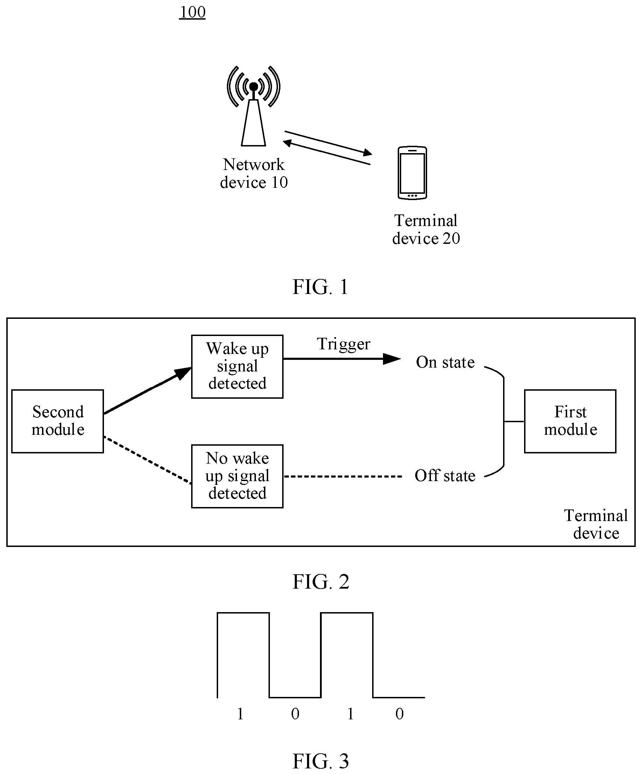

FIG. 1 is a diagram of a communication system according to an embodiment of this application.

The communication system 100 shown in FIG. 1 includes a network device 10 and a terminal device 20. In the communication system, the terminal device 20 may send uplink data/an uplink signal/uplink information to the network device 10, and the network device 10 may send downlink data/a downlink signal/downlink information to the terminal device 20.

The communication method provided in this embodiment of this application may further relate to a device or a transmission node that is not shown in FIG. 1. This is not limited in this embodiment of this application.

The communication system used in this embodiment of this application is merely an example for description, and the communication system applicable to this embodiment of this application is not limited thereto. Any communication system that can implement functions of the foregoing devices is applicable to this embodiment of this application.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a wireless fidelity (wireless fidelity, Wi-Fi) communication system, a universal mobile telecommunications system (universal mobile telecommunications system, UMTS), a worldwide interoperability for microwave access (worldwide interoperability for microwave access, WiMAX) communication system, a 5th generation (5th Generation, 5G) system, for example, an NR system, or a future evolved communication system (for example, a 6G mobile communication system), vehicle-to-everything (vehicle-to-everything, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an Internet of vehicles, machine-type communication (machine-type communication, MTC), an Internet of things (Internet of things, IoT), long term evolution-machine (long term evolution-machine, LTE-M), machine-to-machine (machine-to-machine, M2M), and the like.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing a user with voice/data connectivity), for example, a handheld device or a vehicle-mounted device having a wireless connection function. The terminal device in embodiments of this application may be a mobile phone (mobile phone), a tablet computer (pad), a computer having a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, an entire vehicle device, a vehicle-mounted module, or a vehicle) in the Internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal in a 5G network or a terminal in a future evolution network, or the like. In addition, the terminal device may also be used in scenarios such as self-driving (self-driving), telemedicine (telemedical), a smart grid (smart grid), transportation safety (transportation safety), a smart city (smart city), a smart city (smart city), and a smart home (smart home). It may be understood that all or a part of functions of the terminal device in this application may alternatively be implemented by using a software function running on hardware, or may be implemented by using an instantiated virtualization function on a platform (for example, a cloud platform).

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network.

The network device includes but is not limited to various types of base stations, such as a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), or may be a server, a wearable device, a vehicle-mounted device, a wireless relay node, a wireless backhaul node, a transmission point (transmission point, TP), or a transmission reception point (transmission reception point, TRP), or the like, may be one or a group of antenna panels (including a plurality of antenna panels) of the base station, or may be a network node that constitutes the base station, for example, a baseband unit (BBU) or a distributed unit (distributed unit, DU). The base station may be a macro base station, a micro base station, a pico base station, a small cell, a relay station, a balloon station, or the like. It may be understood that all or a part of functions of the network device in this application may alternatively be implemented by using a software function running on hardware, or may be implemented by using an instantiated virtualization function on a platform (for example, a cloud platform).

Generally, regardless of whether the terminal device performs a paging receiving procedure in an idle/inactive state or when the terminal device receives data in a connected state, the terminal device uses a same receiving module (or a receiver or a receiving circuit). In this application, a module that completes these functions (or performs related steps) may be referred to as a first module. It may be understood that the first module is merely a name for differentiation, and a specific name of the first module does not constitute any limitation on the protection scope of this application. For example, the first module may also be a first circuit or a main circuit. For ease of description, the following is uniformly described as the first module.

A process in which the terminal device receives a signal by using the first module may be referred to as a process in which the signal is transmitted on a link (which may be denoted as a first link for differentiation). The first link represents a connection relationship between the terminal device and the network device, and is a logical concept rather than a physical entity. The first link may also be referred to as a primary link. For ease of description, the following is uniformly described as the first link.

It may be understood that, power consumption of performing, by the terminal device, a paging receiving procedure by using the first module is high. For example, the terminal device first uses a receiving module of the first module to receive a downlink signal, then performs blind detection on a physical downlink control channel (physical downlink control channel, PDCCH), and finally performs decoding on a received physical downlink shared channel (physical downlink shared channel, PDSCH). These all cause high power consumption. In addition, because a circuit structure of the first module is complex, reference power consumption of the first module during operation is also high.

To reduce high power consumption caused when the terminal device performs a paging receiving procedure by using the first module, the terminal device may use a separate low-power-consumption small circuit to receive a wake up signal (wake up signal/radio, WUS/WUR). The wake up signal indicates paging-related information, and the paging-related information may include a paged terminal device or a paged terminal device group. The foregoing low-power-consumption small circuit may be implemented by using a separate small circuit or chip with a simple structure, so that power consumption of the low-power-consumption small circuit is low.

In a possible implementation, the low-power-consumption small circuit may be a wake up receiver (wake up receiver, WUR), a wake up circuit, a low-power-consumption circuit, or the like. A specific name of the low-power-consumption small circuit is not limited in this application. In this application, the low-power-consumption small circuit may be referred to as a second module. It may be understood that the second module is merely a name for differentiation, and a specific name of the second module does not constitute any limitation on the protection scope of this application. For example, the second module may also be a second circuit or a wake up circuit. For ease of description, the low-power-consumption small circuit is described as the second module in the following.

Similarly, a process in which the terminal device receives a signal by using the second module may be referred to as a process in which the signal is transmitted on a link (denoted as a second link for differentiation). The second link represents a connection relationship between the terminal device and the network device, and is a logical concept rather than a physical entity. It should be understood that the wake up signal is merely an example name, and a name thereof is not limited in this application. In addition, for a description that the terminal device receives the wake up signal by using the second module, refer to FIG. 2.

FIG. 2 is a working diagram of a second module in a terminal device according to an embodiment of this application.

As shown in FIG. 2, the terminal device includes a first module and the second module. The second module may receive a wake up signal, for example, an LP-WUS.

For example, the wake up signal may carry paging information. When the terminal device is in an IDLE/INACTIVE state, if the second module detects the wake up signal, the first module may be triggered, so that the first module is in an on state; or if the second module does not detect the wake up signal, the first module may be in an off state or in an ultra-deep sleep state (ultra-deep sleep state).

If the paging information carried in the wake up signal may indicate a paged terminal device #1, after a second module of the terminal device #1 detects the paging information, the first module may be triggered, so that after the first module is in the on state, the terminal device #1 initiates a random access procedure. If the paging information carried in the wake up signal indicates a terminal device group to which a paged terminal device #1 belongs, after a second module of the terminal device #1 detects the paging information, the first module may be triggered, so that after the first module is in the on state, the terminal device #1 receives paging (paging) on a PO, and determines, based on a paging result, whether the terminal device #1 is paged. The terminal device may periodically receive paging. In an example, the terminal device may obtain, through calculation, a position of a PF and a position of a PO in the PF based on an identifier (identifier, ID) of the terminal device (UE ID), and receive paging on the PO.

For example, the wake up signal may carry PDCCH monitoring indication information. When the terminal device is in a CONNECTED state, if the second module detects the wake up signal, the first module may be triggered, so that the first module is in the on state and monitors a PDCCH; or if the second module does not detect the wake up signal, the first module may be in a sleep state (for example, micro sleep micro sleep, light sleep light sleep, or deep sleep deep sleep).

It may be understood that the first module in the on state may detect or receive a signal other than the wake up signal, and the first module in the off state does not detect or receive a signal.

The following describes modulation methods of the LP-WUS.

### Method #1: On-off keying (on-off Keying, OOK) modulation

To reduce power consumption of a wake up circuit, the LP-WUS signal may be modulated through OOK. Correspondingly, the wake up circuit may receive the wake up signal by using an envelope detection method.

For example, when the LP-WUS is modulated through OOK, each encoded bit corresponds to one OOK symbol (symbol, which may also be referred to as one chip chip). When the bit is "1", a signal is sent in a length of the OOK symbol, that is, a signal power in the length of the OOK symbol is not 0, and the OOK symbol may be referred to as an ON signal. When the bit is "0", no signal is sent in the length of the OOK symbol, that is, a signal power in the length of the OOK symbol is 0, and the OOK symbol may be referred to as an OFF signal. A waveform shown in FIG. 3 represents bits 1010. Alternatively, when the bit is "0", a signal is sent in the length of the OOK symbol; or when the bit is "1", no signal is sent in the length of the OOK symbol. This is not limited in this application.

When a receiver demodulates an OOK signal, a threshold may be set. In a length of an OOK symbol, if a power of a signal (or a signal amplitude) received by the receiver is greater than the threshold, it is considered that received bit information is "1"; or if a power of a signal (or a signal amplitude) received by the receiver is less than the threshold, it is considered that received bit information is "0". Alternatively, if a power of a signal (or a signal amplitude) received by the receiver is greater than the threshold, it is considered that received bit information is "0"; or if a power of a signal (or a signal amplitude) received by the receiver is less than the threshold, it is considered that received bit information is "1". This is not limited in this application.

In the foregoing example, it is difficult to set the threshold of the receiver. If the threshold is not appropriately selected, a demodulation error rate increases. To resolve this problem, in a possible implementation, Manchester encoding is performed. For example, through Manchester encoding, an original information bit "0" is encoded as "10", and an original information bit "1" is encoded as "01". When sending a signal, a transmitter uses two OOK symbols to send 1-bit original information, where the original information bit "0" corresponds to one ON signal and one OFF signal, and the original information bit "1" corresponds to one OFF signal and one ON signal. When demodulating an OOK signal obtained through Manchester encoding, the receiver may determine through comparison values of signal powers (or signal amplitudes) in two adjacent OOK symbols. If a signal power (or a signal amplitude) in a former OOK symbol is greater than a signal power (or a signal amplitude) in a latter OOK symbol, received bit information is considered as "0". Otherwise, the received bit information is considered as "1". In this implementation, an absolute threshold may not be selected for determining.

### Method #2: Orthogonal frequency division multiplexing (orthogonal frequency division multiplexing, OFDM) modulation

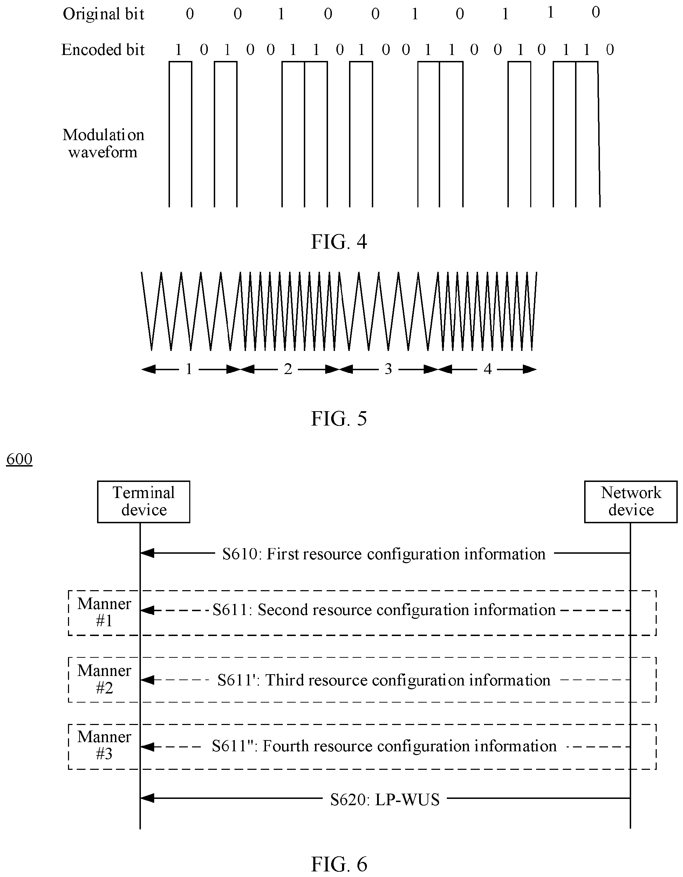

For example, a network device in a 5th generation (5th Generation, 5G) new radio (new radio, NR) system may send a signal obtained through OFDM modulation. To be compatible with the 5G NR system, OFDM modulation may be implemented on an OOK signal through a transmitter. For example, when an ON signal of a length of one OFDM symbol needs to be sent, the transmitter sends a specific signal, so that a contour of the signal in the length of the OFDM symbol resembles a square wave as much as possible. When an OFF signal of a length of one OFDM symbol needs to be sent, the transmitter be turned off for time of the length of the OFDM symbol. As shown in FIG. 4, original bits are "0010010110", encoded bits obtained through Manchester encoding are "10100110100110010110", and a modulation waveform is a waveform shown in FIG. 4. A time length corresponding to each encoded bit is a length of one OFDM symbol.

### Method #3: Frequency-shift keying (frequency-shift keying, FSK) modulation

For example, when FSK modulation is performed on an LP-WUS, different frequency domain resources are used for different information. Specifically, two candidate (candidate) frequency domain resources may carry 1-bit information. When a bit is "0", information may be sent on a frequency domain resource f0, and no information is sent on a frequency domain resource f1. When a bit is "1", information may be sent on the frequency domain resource f1, and no information is sent on the frequency domain resource f0. It is assumed that f0<f1 and a waveform of an FSK signal whose bits are "0101" is shown in FIG. 5. An arrow indicates one FSK symbol. In a first FSK symbol and a third FSK symbol, a frequency of the FSK signal is low, and in a second FSK symbol and a fourth FSK symbol, a frequency of the FSK signal is high. When demodulating the signal, a receive end may compare a power of the signal on f0 and a power of the signal on f1. If the power of the signal on f0 is higher than the power of the signal on f1, it indicates that information sent by a transmit end is a bit "0". If the power of the signal on f1 is higher than the power of the signal on f0, it indicates that information sent by the transmit end is a bit "1".

In addition, FSK further supports a higher modulation order to carry more information. For example, four candidate frequency domain resources may carry 2-bit information. When bits are "00", information may be sent on a frequency domain resource f0, and no information is sent on a frequency domain resource f1, a frequency domain resource f2, and a frequency domain resource f3. When bits are "01", information may be sent on a frequency domain resource f1, and no information is sent on a frequency domain resource f0, a frequency domain resource f2, and a frequency domain resource f3. When bits are "10", information may be sent on a frequency domain resource f2, and no information is sent on a frequency domain resource f0, a frequency domain resource f1, and a frequency domain resource f3. When bits are "11", information may be sent on a frequency domain resource f3, and no information is sent on a frequency domain resource f0, a frequency domain resource f1, and a frequency domain resource f2. Similar to the foregoing example, the receive end may compare powers on a plurality of frequency domain resources, to further determine content of the information sent by the transmit end.

In a possible implementation, an LP-WUS and a signal of an NR system are carried on a same carrier. For example, frequency division multiplexing (frequency division multiplexing, FDM) is performed on the LP-WUS and the signal of the NR system, that is, the LP-WUS and the signal of the NR system occupy different frequency domain resources.

In the foregoing implementation, a part of time domain resources corresponding to a frequency domain resource corresponding to the LP-WUS cannot be fully utilized. If a network device sends a signal of another NR system on an unused time domain resource corresponding to the frequency domain resource corresponding to the LP-WUS, and does not notify the terminal device, the terminal device may perform false detection, for example, uses a PDCCH or a PDSCH as the LP-WUS for demodulation.

In addition, because the LP-WUS may be sent at any time, the terminal device needs to continuously monitor the LP-WUS, and power consumption is high. For the network device, the network device may be shut down for short time and sleep in a time period in which no signal is sent/received, to achieve an objective of reducing power consumption. If the LP-WUS may be sent at any time, the network device may not sleep. Therefore, the power consumption of the network device is also high.

In view of this, this application provides a communication method and apparatus, to determine a time domain resource of an LP-WUS, to reduce power consumption.

FIG. 6 is a schematic flowchart of a communication method according to an embodiment of this application. The method 600 shown in FIG. 6 includes the following steps.

S610: A network device sends first resource configuration information. Correspondingly, a terminal device receives the first resource configuration information from the network device. The first resource configuration information indicates a first time domain resource of an LP-WUS, and the LP-WUS is used to wake up the terminal device.

It may be understood that the first time domain resource is an available resource of the LP-WUS, that is, the LP-WUS may be transmitted on all or a part of the first time domain resource. The first resource configuration information may directly indicate the first time domain resource, or the first resource configuration information may indirectly indicate the first time domain resource. For example, the first resource configuration information indicates an unavailable resource of the LP-WUS, and the terminal device determines the first time domain resource by using the unavailable resource indicated by the first resource configuration information. A manner of indicating the first time domain resource is not limited in this embodiment of this application.

In a possible implementation #1, the first resource configuration information indicates a periodicity of the first time domain resource and a time domain position of the first time domain resource in the periodicity.

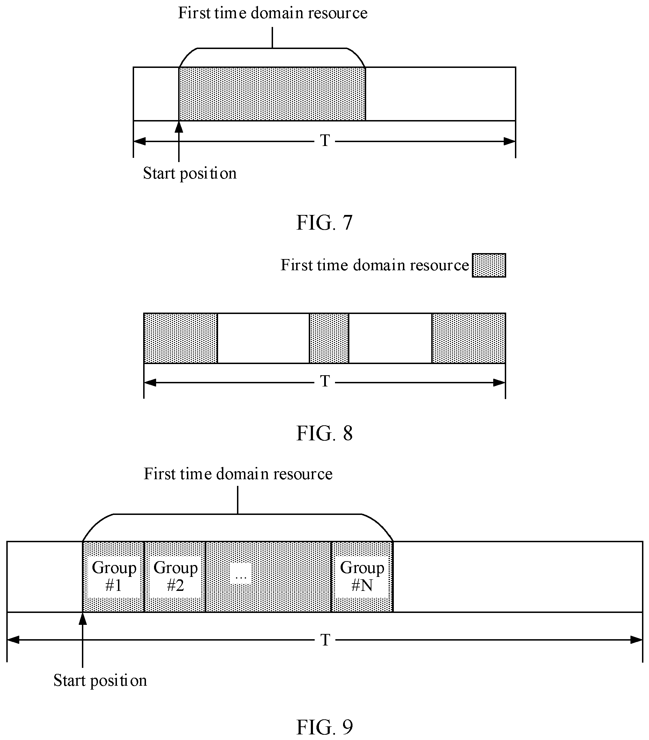

Example #1: The first resource configuration information indicates a periodicity and a start position of the first time domain resource. As shown in FIG. 7, the first resource configuration information indicates a periodicity T of the first time domain resource, that is, in each time length T, a first time domain resource may be present for transmission of an LP-WUS, and a time domain resource other than the first time domain resource in each periodicity T may be used to transmit another NR signal. The first resource configuration information further indicates the start position of the first time domain resource. The terminal device may determine, based on the start position, a start position of the first time domain resource in each periodicity. The start position may be indicated by using an offset value O.

Optionally, the first resource configuration information further indicates a length of the first time domain resource.

It may be understood that the length of the first time domain resource may be predefined or preconfigured in the terminal device. Alternatively, in a process of monitoring the LP-WUS, the terminal device determines, based on the start position indicated by the first resource configuration information, a start moment for monitoring the LP-WUS. The monitoring duration may be determined by the terminal device. In this case, the first resource configuration information may not indicate the length of the first time domain resource. When the length of the first time domain resource is not predefined or preconfigured, the network device needs to indicate the length of the first time domain resource by using the first resource configuration information, so that the terminal device can determine duration of monitoring the LP-WUS in each periodicity.

Example #2: The first resource configuration information indicates a bitmap (bitmap) and a periodicity of the first time domain resource, and the bitmap indicates a time domain position of the first time domain resource in the periodicity. A granularity of the first time domain resource indicated by the bitmap is any one of the following: a time domain symbol, a slot, a frame, a subframe, a time domain symbol group, a slot group, a frame group, or a subframe group, where the time domain symbol group includes at least two time domain symbols, the slot group includes at least two slots, the frame group includes at least two frames, and the subframe group includes at least two subframes. As shown in FIG. 8, the first resource configuration information may indicate a contiguous or non-contiguous time domain resource by using the bitmap. This is flexible.

For example, the granularity of the first time domain resource indicated by the bitmap is the slot (slot), that is, each bit in the bitmap may indicate one slot. If the periodicity indicated by the first resource configuration information is 10 slots, the bitmap includes 10 bits, and each bit corresponds to one slot. A bit "1" indicates that a slot corresponding to the bit belongs to the first time domain resource, and a bit "0" indicates that a slot corresponding to the bit does not belong to the first time domain resource. On the contrary, a bit "0" indicates that a slot corresponding to the bit belongs to the first time domain resource, and a bit "1" indicates that a slot corresponding to the bit does not belong to the first time domain resource. This is not limited in this embodiment of this application.

For another example, the granularity of the first time domain resource indicated by the bitmap is the time domain symbol group (symbol bundle/symbol group). The network device may configure a size of the group. For example, one time domain symbol group includes seven time domain symbols. If the periodicity indicated by the first resource configuration information is 140 time domain symbols, the bitmap includes 20 bits, and each bit corresponds to one time domain symbol group. Abit "1" indicates that a time domain symbol group corresponding to the bit belongs to the first time domain resource, and a bit "0" indicates that a time domain symbol group corresponding to the bit does not belong to the first time domain resource. Alternatively, content indicated by a bit "1" and content indicated by a bit "0" may be reversed. Refer to the foregoing descriptions. Details are not described again. If the granularity of the first time domain resource indicated by the bitmap is another granularity, refer to the descriptions in which the granularity of the first time domain resource indicated by the bitmap is the slot or the time domain symbol group. Examples are not enumerated.

In a possible implementation #2, the first time domain resource is a time domain resource of at least one of the following: a synchronization signal and physical broadcast channel block (synchronization signal and physical broadcast channel block, SSB), a control resource set CORESET 0, or a tracking reference signal (tracking reference signal, TRS).

It may be understood that the first resource configuration information may be resource configuration information of the SSB, the CORESET 0, or the TRS. The network device and the terminal device may agree on a rule, that is, a time domain resource corresponding to one or more of the SSB, the CORESET 0, and the TRS may be used to transmit the LP-WUS. In other words, the terminal device may indirectly determine the first time domain resource by determining a time domain resource of the SSB, the CORESET 0, or the TRS. In other words, this implementation may be considered as an implicit manner of indicating the first time domain resource, and overheads of resource configuration signaling may be reduced.

It may be further understood that, in this embodiment of this application, the possible implementation #1 and the possible implementation #2 may be separately implemented, or may be implemented in combination. For example, the network device indicates, to the terminal device in the possible implementation #1, the time domain resource of the LP-WUS shown in FIG. 7 or FIG. 8. When determining the first time domain resource, the terminal device may combine the possible implementation #1 and the possible implementation #2, that is, determine that the first time domain resource includes the time domain resource of the LP-WUS shown in FIG. 7 or FIG. 8. The first time domain resource further includes the time domain resource of one or more of the SSB, the CORESET 0, and the TRS. When the first time domain resource further includes the time domain resource corresponding to one or more of the SSB, the CORESET 0, and the TRS, the time domain resource occupied by the SSB, the CORESET 0, or the TRS is the same as a time domain resource occupied by the LP-WUS, and a frequency domain resource occupied by the SSB, the CORESET 0, or the TRS is different from a frequency domain resource occupied by the LP-WUS.

S620: The network device sends the LP-WUS on all or a part of the first time domain resource. Correspondingly, the terminal device receives the LP-WUS from the network device on all or the part of the first time domain resource.

It may be understood that, after receiving the LP-WUS, the terminal device may perform a corresponding operation based on specific content carried in the LP-WUS. For details, refer to related descriptions corresponding to FIG. 2. Details are not described again. In addition, that the terminal device receives the LP-WUS on the time domain resource in this application may also be understood as follows: The terminal device monitors the LP-WUS on the time domain resource, or the terminal device monitors and receives the LP-WUS on the time domain resource. This is not limited in this application. Details are not described in the following. Based on the method 600, the terminal device and the network device may determine the time domain resource of the LP-WUS. Compared with a solution in which the terminal device does not determine the time domain resource of the LP-WUS and continuously monitors the LP-WUS in the conventional technology, the solution provided in the method 600 can reduce power consumption of the terminal device. In addition, the network device may appropriately plan the time domain resource from a perspective of the network device, and centralize the time domain resource of the LP-WUS and a time domain resource of another signal as much as possible. This helps the network device sleep, so that power consumption of the network device can be reduced.

The foregoing describes a manner in which the network device configures the time domain resource of the LP-WUS for the terminal device. In this manner, each terminal device needs to monitor duration of the first time domain resource. The following describes a manner in which the network device further allocates the first time domain resource to different terminal devices.

### Manner #1

Optionally, the method 600 further includes the following step:
S611: The network device sends second resource configuration information. Correspondingly, the terminal device receives the second resource configuration information from the network device. The second resource configuration information indicates a first quantity and/or a length of a second time domain resource, the first quantity is used to determine a start position of the second time domain resource, and the second time domain resource is a part of the first time domain resource.

In a possible implementation, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups. The terminal device group includes at least one terminal device. For example, the terminal device in FIG. 6 belongs to one of the terminal device groups.

It may be understood that, when the first quantity is the quantity of terminal devices, the quantity of terminal devices may be a quantity of terminal devices in an idle state, or a quantity of terminal devices that establish connections to the network device. Because the terminal devices monitor the LP-WUS at different time domain positions, the quantity of terminal devices may also be described as the quantity of time domain positions at which the terminal devices monitor the LP-WUS, or the quantity of intervals in which the terminal devices monitor the LP-WUS. The interval for monitoring the LP-WUS is, for example, a time unit interval for monitoring the LP-WUS. When the first quantity is the quantity of terminal device groups, the quantity of terminal device groups may be a quantity of terminal device groups in an idle state, or a quantity of terminal device groups that establish connections to the network device. To be specific, the network device groups terminal devices, different terminal device groups may monitor the LP-WUS at different start positions, and monitoring duration may be the same. Start positions and duration for monitoring the LP-WUS by terminal devices in a same terminal device group may be the same. Therefore, the quantity of terminal device groups may also be described as a quantity of time domain positions at which the terminal device groups monitor the LP-WUS, or a quantity of intervals in which the terminal device groups monitor the LP-WUS.

For brevity in the following, the first quantity is described by using the quantity of terminal device groups as an example. For a specific implementation in which the first quantity is the quantity of terminal devices, refer to an implementation in which the first quantity is the quantity of terminal device groups, that is, each terminal device group has only one terminal device.

For example, the first time domain resource configured by using the first resource configuration information is a contiguous time domain resource. In this case, the second resource configuration information may indicate the first quantity, the first quantity is a quantity N of terminal device groups, N is an integer greater than or equal to 1, duration D2 of the second time domain resource may be determined based on D1/N, and D1 is the duration of the first time domain resource. A terminal device in the terminal device group may determine the duration of the first time domain resource in the manner described in Example #1 in S610. The start position t of the second time domain resource may be determined based on t mod T=O+D2*n, where mod represents a modulo operation, T is the periodicity of the first time domain resource, O is the start position of the first time domain resource, T and O may be obtained by using the first resource configuration information, and n may be determined based on an identifier (identifier, ID) of the terminal device or an identifier of the terminal device group. For example, n=UE_ID mod N or n=UE_group_ID mod N, where UE_ID is the identifier of the terminal device, and UE_group_ID is the identifier of the terminal device group. The identifier of the terminal device or the identifier of the terminal device group may be configured by a network side, and the network side is, for example, a base station or a core network device.

As shown in FIG. 9, terminal devices are grouped into N groups, for example, a terminal device group #1, a terminal device group #2, ..., and a terminal device group #N. Each terminal device group corresponds to one second time domain resource. A start position of the second time domain resource corresponding to each terminal device group may be determined based on t mod T=O+D2*n, and duration of second time domain resources corresponding to all terminal device groups is the same.

For example, the first time domain resource configured by using the first resource configuration information is a contiguous time domain resource. In this case, the second resource configuration information may indicate the length of the second time domain resource. The terminal device in the terminal device group may determine the first quantity based on the duration D1 of the first time domain resource and the length D2 of the second time domain resource. The terminal device in the terminal device group may determine D1 in the manner described in Example #1 in S610, where the first quantity=D1/D2. The terminal device determines the start position of the second time domain resource based on the first quantity. For details, refer to the foregoing descriptions. Details are not described again.

For example, the first time domain resource configured by using the first resource configuration information is a contiguous time domain resource. In this case, the second resource configuration information may indicate the first quantity N and the length D2 of the second time domain resource. The terminal device in the terminal device group may determine N and D2 based on the second resource configuration information. The start position t of the second time domain resource may be determined based on the formula: t mod T=O+D2*n. For determining of T, O, and n, refer to the foregoing descriptions. Details are not described again.

In Manner #1, S620 may be replaced with the following: The network device sends the LP-WUS on the second time domain resource. Correspondingly, the terminal device receives the LP-WUS from the network device on the second time domain resource.

For example, when terminal devices are grouped, terminal device groups include a terminal device group #1 and a terminal device group #2, a second time domain resource corresponding to the terminal device group #1 is a time domain resource #1, and a second time domain resource corresponding to the terminal device group #2 is a time domain resource #2. The network device sends an LP-WUS #1 to the terminal device group #1 on the time domain resource #1, and a terminal device in the terminal device group #1 receives the LP-WUS #1 on the time domain resource #1. The LP-WUS #1 is used to wake up all or a part of terminal devices in the terminal device group #1. The network device sends an LP-WUS #2 to the terminal device group #2 on the time domain resource #2, and a terminal device in the terminal device group #2 receives the LP-WUS #2 on the time domain resource #2. The LP-WUS #2 is used to wake up all or a part of terminal devices in the terminal device group #2.

### Manner #2

Optionally, the method 600 further includes the following step:
S611': The network device determines a valid resource set of the first time domain resource, and sends third resource configuration information to the terminal device. Correspondingly, the terminal device determines the valid resource set of the first time domain resource, and the terminal device receives the third resource configuration information from the network device. The third resource configuration information indicates a second quantity and/or a length of a third time domain resource in the valid resource set, the second quantity is used to determine a start position of the third time domain resource, and the third time domain resource corresponds to a second time domain resource in the first time domain resource.

In a possible implementation, the second quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

For a specific meaning of the second quantity, refer to the descriptions of the first quantity in S611. Details are not described again.

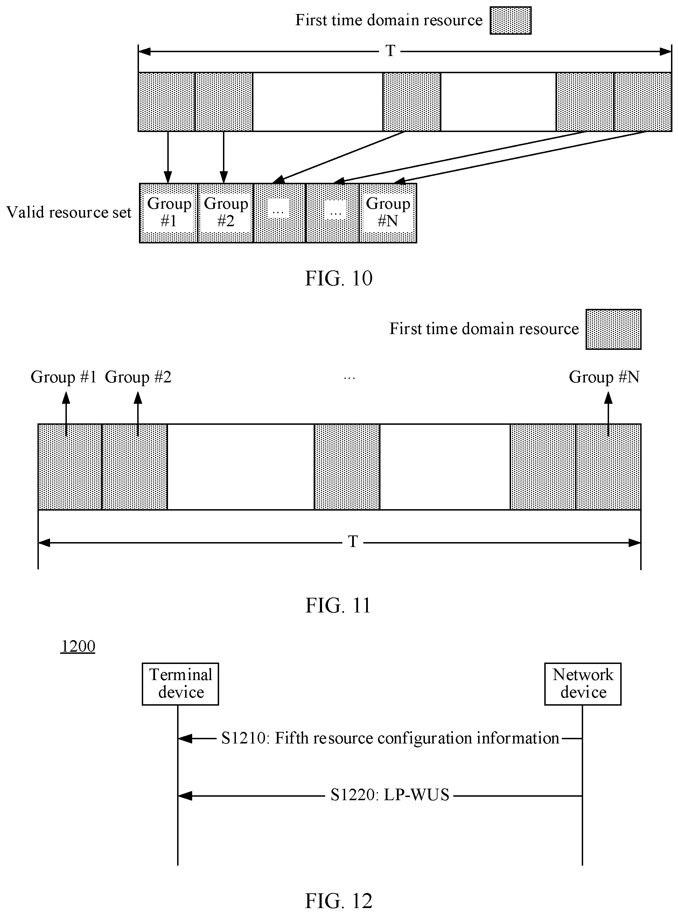

For example, the first time domain resource configured by using the first resource configuration information is a contiguous or non-contiguous time domain resource. The following uses the non-contiguous time domain resource as an example for description. As shown in FIG. 10, the terminal device may determine the non-contiguous first time domain resource in the periodicity T by using the bitmap in the first resource configuration information, and further determine the valid resource set, that is, map the non-contiguous first time domain resource to the valid resource set. Total duration of time domain resources in the valid resource set in one periodicity is a sum of duration of the non-contiguous time domain resource in the first time domain resources in the periodicity, and the total duration of the time domain resources in the valid resource set may be determined based on an indication of the bitmap.

If the third resource configuration information indicates the second quantity, duration D2 of the third time domain resource may be determined based on the total duration D1 of the time domain resources in the valid resource set and the second quantity N. For example, D2=D1/N. The start position k of the third time domain resource may be determined based on a formula: k mod D1=D2*O_UE. O_UE is an offset value corresponding to one terminal device (when terminal devices are not grouped) or an offset value corresponding to one terminal device group (when terminal devices are grouped), and may be determined based on D2*n. n may be determined based on an identifier of the terminal device or an identifier of the terminal device group. For details, refer to related descriptions in Manner #1. Alternatively, O_UE may be determined by using an offset value indicated by the network device to the terminal device. To be specific, optionally, the network device sends indication information to the terminal device, where the indication information indicates the offset value, and the offset value is used to determine O_UE. Correspondingly, the terminal device receives the indication information. After the duration and the start position of the third time domain resource are determined, the start position and the duration of the second time domain resource may be determined based on a mapping relationship between the first time domain resource and the valid resource set.

If the third resource configuration information indicates the duration of the third time domain resource, the second quantity N may be determined based on the total duration D1 of the time domain resources in the valid resource set and the duration D2 of the third time domain resource. For example, N=D1/D2. For determining the start position k of the third time domain resource, refer to the foregoing descriptions. After the duration and the start position of the third time domain resource are determined, the start position and the duration of the second time domain resource may be determined based on a mapping relationship between the first time domain resource and the valid resource set.

If the third resource configuration information indicates the second quantity and the duration of the third time domain resource, D2 and N may be directly determined by using the third resource configuration information. For determining the start position k of the third time domain resource, refer to the foregoing descriptions. After the duration and the start position of the third time domain resource are determined, the start position and the duration of the second time domain resource may be determined based on a mapping relationship between the first time domain resource and the valid resource set.

In Manner #2, S620 may be replaced with the following: The network device sends the LP-WUS on the second time domain resource. Correspondingly, the terminal device receives the LP-WUS from the network device on the second time domain resource.

For example, when terminal devices are grouped, terminal device groups include a terminal device group #1 and a terminal device group #2. A terminal device in the terminal device group #1 may determine the valid resource set, determine the third time domain resource in the valid resource set based on the third resource configuration information, and determine a time domain resource #1 in the first time domain resource based on a mapping relationship between the valid resource set and the first time domain resource. A terminal device in the terminal device group #2 determines the valid resource set, determines the third time domain resource in the valid resource set based on the third resource configuration information, and determines a time domain resource #2 in the first time domain resource based on the mapping relationship between the valid resource set and the first time domain resource.

The network device sends an LP-WUS #1 to the terminal device group #1 on the time domain resource #1, and the terminal device in the terminal device group #1 receives the LP-WUS #1 on the time domain resource #1. The network device sends an LP-WUS #2 to the terminal device group #2 on the time domain resource #2, and the terminal device in the terminal device group #2 receives the LP-WUS #2 on the time domain resource #2.

### Manner #3

Optionally, the method 600 further includes the following step:
S611": The network device sends fourth resource configuration information. Correspondingly, the terminal device receives the fourth resource configuration information from the network device. The fourth resource configuration information indicates an offset value list, or the fourth resource configuration information indicates an offset value list and a length of a second time domain resource, the offset value list includes at least one offset value, the offset value list includes a first offset value, the first offset value is used to determine a start position of the second time domain resource, and the second time domain resource is a part of the first time domain resource.

For example, the first time domain resource configured by using the first resource configuration information is a contiguous or non-contiguous time domain resource. The following uses the non-contiguous time domain resource as an example for description. As shown in FIG. 11, the terminal device may determine the non-contiguous first time domain resource in the periodicity T by using the bitmap in the first resource configuration information.

The fourth resource configuration information indicates the offset value list. A quantity of offset values included in the offset value list may be the first quantity or the second quantity N described above. If terminal devices are not grouped, offset values are in one-to-one correspondence with the terminal devices. If terminal devices are grouped, offset values are in one-to-one correspondence with the terminal device groups. Specifically, the offset value list includes the first offset value, and the first offset value corresponds to a terminal device #1 or a terminal device group #1. When the first offset value corresponds to the terminal device group #1, each terminal device in the terminal device group #1 may determine the start position of the second time domain resource based on the first offset value. The start position t of the second time domain resource may be determined based on a formula: t mod T=O+O_UE. O represents the start position of the first time domain resource, and O_UE is an offset value in an offset value list corresponding to each terminal device or terminal device group. For example, for the terminal device #1 or the terminal device group #1, O_UE is the first offset value.

Alternatively, the fourth resource configuration information indicates the offset value list and the duration of the second time domain resource. In this case, each offset value in the offset value list may be associated with the duration of the second time domain resource. The start position t of the second time domain resource may be determined based on a formula: t mod T=O+O_UE. O_UE may be determined by using the offset value and the duration of the second time domain resource. For example, the duration of the second time domain resource is D2, and each offset value included in the offset value list is a multiple of D2. If the offset value is 2, it indicates that O_UE is 2*D2.

It may be understood that when the fourth resource configuration information does not indicate the duration of the second time domain resource, overheads of indicating the offset value list by the fourth resource configuration information are high. For example, if T=1400 time domain symbols, each offset value needs to be indicated by using log₂(1400)=11 bits, and N=10, 10 offset values need to be indicated by using 110 bits. When the fourth resource configuration information indicates the duration D2 of the second time domain resource, for example, D2=28, each offset value needs to be indicated by using log₂(1400/28)=6 bits, and 10 offset values need to be indicated by using 60 bits. This reduces signaling overheads of indicating the offset value.

In Manner #3, S620 may be replaced with the following: The network device sends the LP-WUS on the second time domain resource. Correspondingly, the terminal device receives the LP-WUS from the network device on the second time domain resource.

For details, refer to related descriptions of S620 in Manner #1. Details are not described again.

For example, the resource configuration information (for example, the first resource configuration information, the second resource configuration information, the third resource configuration information, and the fourth resource configuration information) in the method 600 may be carried in radio resource control (radio resource control, RRC) layer signaling. The first resource configuration information and the second resource configuration information may be carried in same RRC signaling, or may be carried in different RRC signaling. The first resource configuration information and the third resource configuration information may be carried in same RRC signaling, or may be carried in different RRC signaling. The first resource configuration information and the fourth resource configuration information may be carried in same RRC signaling, or may be carried in different RRC signaling. This is not limited in this embodiment of this application.

Based on Manner #1, Manner #2, or Manner #3, the terminal device may further determine the second time domain resource from the first time domain resource. This reduces duration for monitoring the LP-WUS by the terminal device, and further reduces power consumption of the terminal device.

FIG. 12 is another schematic flowchart of a communication method according to an embodiment of this application. The method 1200 shown in FIG. 12 includes the following steps.

S1210: A network device sends fifth resource configuration information. Correspondingly, a terminal device receives the fifth resource configuration information from the network device. The fifth resource configuration information indicates a first quantity, and a length and a periodicity of a second time domain resource, and the first quantity is used to determine a start position of the second time domain resource.

It may be understood that, for the first quantity, refer to the descriptions of the first quantity in step S611. Details are not described again.

For example, the terminal device may determine the start position t of the second time domain resource based on the following formula: t mod T=O+D2*n. T is a periodicity, D2 is duration of the second time domain resource, and n may be determined based on an identifier of the terminal device or an identifier of a terminal device group. For a specific manner of determining n, refer to related descriptions in Manner #1 in the method 600. Details are not described again. O may be equal to 0, or O may be indicated by the network device to the terminal device by using configuration information. For example, the fifth resource configuration information further indicates O, or O may be indicated by using other configuration information. This is not limited in this embodiment of this application.

For example, the fifth resource configuration information may be carried in RRC signaling.

S1220: The network device sends an LP-WUS on the second time domain resource. Correspondingly, the terminal device receives the LP-WUS from the network device on the second time domain resource. The LP-WUS is used to wake up the terminal device.

For example, when terminal devices are not grouped, each terminal device may determine, based on the fifth resource configuration information, a second time domain resource corresponding to the terminal device, and receive, on the second time domain resource corresponding to the terminal device, the LP-WUS sent by the network device. When terminal devices are grouped, a terminal device in each terminal device group may determine, based on the fifth resource configuration information, a second time domain resource corresponding to each terminal device group, and receive, on the second time domain resource, the LP-WUS sent by the network device. It may be understood that different terminal devices in one terminal device group correspond to a same second time domain resource.

Based on the method 1200, the terminal device may determine the second time domain resource to monitor the LP-WUS. Compared with a solution in which the terminal device does not determine a time domain resource of the LP-WUS and continuously monitors the LP-WUS in the conventional technology, the solution provided in the method 1200 can reduce power consumption of the terminal device. In addition, the network device may appropriately plan the time domain resource from a perspective of the network device. This helps the network device sleep, so that power consumption of the network device can be reduced.

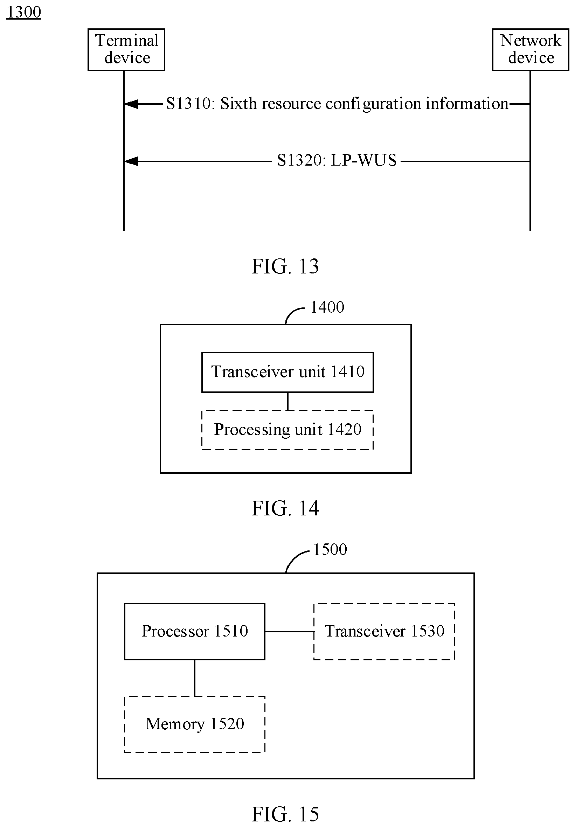

FIG. 13 is still another schematic flowchart of a communication method according to an embodiment of this application. The method 1300 shown in FIG. 13 includes the following steps.

S1310: A network device sends sixth resource configuration information. Correspondingly, a terminal device receives the sixth resource configuration information from the network device. The sixth resource configuration information indicates a periodicity and an offset value list of a second time domain resource, the offset value list includes at least one offset value, the offset value list includes a first offset value, and the first offset value is used to determine a start position of the second time domain resource.

For example, the sixth resource configuration information indicates that the periodicity of the second time domain resource is T. A quantity of offset values included in the offset value list may be the first quantity or the second quantity N described above. If terminal devices are not grouped, offset values are in one-to-one correspondence with the terminal devices. If terminal devices are grouped, offset values are in one-to-one correspondence with the terminal device groups. Specifically, the offset value list includes the first offset value, and the first offset value corresponds to a terminal device #1 or a terminal device group #1. When the first offset value corresponds to the terminal device group #1, each terminal device in the terminal device group #1 may determine the start position of the second time domain resource based on the first offset value. The start position t of the second time domain resource corresponding to each terminal device or each terminal device group may be determined based on a formula: t mod T=O+O_UE. O_UE is an offset value in an offset value list corresponding to each terminal device or terminal device group. For example, for the terminal device #1 or the terminal device group #1, O_UE is the first offset value. O may be equal to 0, or O may be indicated by the network device to the terminal device by using configuration information. For example, the sixth resource configuration information further indicates O, or O may be indicated by using other configuration information. This is not limited in this embodiment of this application.

Optionally, the sixth resource configuration information further indicates a length of the second time domain resource.

For example, when the sixth resource configuration information indicates the offset value list and the length of the second time domain resource, each offset value in the offset value list may be associated with duration of the second time domain resource. For a specific association manner, refer to related descriptions in Manner #3 in the method 600. Details are not described herein again.

For example, the sixth resource configuration information may be carried in RRC signaling.

S1320: The network device sends an LP-WUS on the second time domain resource. Correspondingly, the terminal device receives the LP-WUS from the network device on the second time domain resource. The LP-WUS is used to wake up the terminal device.

For example, when terminal devices are not grouped, each terminal device may determine, based on the sixth resource configuration information, a second time domain resource corresponding to the terminal device, and receive, on the second time domain resource corresponding to the terminal device, the LP-WUS sent by the network device. When terminal devices are grouped, a terminal device in each terminal device group may determine, based on the sixth resource configuration information, a second time domain resource corresponding to each terminal device group, and receive, on the second time domain resource, the LP-WUS sent by the network device. It may be understood that different terminal devices in one terminal device group correspond to a same second time domain resource.

Based on the method 1300, the terminal device may determine the second time domain resource to monitor the LP-WUS. Compared with a solution in which the terminal device does not determine a time domain resource of the LP-WUS and continuously monitors the LP-WUS in the conventional technology, the solution provided in the method 1300 can reduce power consumption of the terminal device. In addition, the network device may appropriately plan the time domain resource from a perspective of the network device. This helps the network device sleep, so that power consumption of the network device can be reduced.

It should be noted that in the method 600/1200/1300, in a time division duplex (time division duplex, TDD) frequency band, when the network device or the terminal device determines the time domain resource of the LP-WUS, a time domain resource used for uplink transmission may be excluded, and only a time domain resource used for downlink transmission is included.

For example, the terminal device mentioned in embodiments of this application is a terminal device that supports an LP-WUS function. To be specific, the terminal device that supports the LP-WUS function can demodulate the LP-WUS, and can perform a related operation based on the LP-WUS.

In this application, the "indication" may be an explicit indication and/or an implicit indication. For example, the implicit indication may be based on a position and/or a resource used for transmission; and the explicit indication may be based on one or more parameters, and/or one or more indexes, and/or one or more bit patterns represented by the explicit indication.

It may be understood that some optional features in embodiments of this application may be independent of other features in some scenarios, or may be combined with other features in some scenarios. This is not limited.

The solutions in embodiments of this application may be appropriately combined for use, and explanations or descriptions of terms, similar operations, or steps in embodiments may be mutually referenced or explained in embodiments. This is not limited.

It may be further understood that, in the foregoing method embodiments, methods and operations implemented by the terminal device may alternatively be implemented by a component (for example, a chip, a chip system, a processor, or a circuit) of the terminal device. Methods and operations implemented by the network device may alternatively be implemented by a component (for example, a chip, a chip system, a processor, or a circuit) of the network device. Methods and operations implemented by a measurement and control device may alternatively be implemented by a component (for example, a chip, a chip system, a processor, or a circuit) of the measurement and control device. This is not limited in this application.

It should be understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually represents an "or" relationship between the associated objects, but may also represent an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c each may be singular or plural. Unless otherwise specified, "a plurality of" in this application means two or more than two.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each of the network elements such as a transmit end device or a receive end device includes a corresponding hardware structure and/or a corresponding software module for performing each of the functions. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmit end device or a receive end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. Descriptions are provided below by using an example in which each functional module is obtained through division based on each corresponding function.

FIG. 14 is a diagram of a structure of a communication apparatus 1400 according to an embodiment of this application. The apparatus 1400 includes a transceiver unit 1410. The transceiver unit 1410 may be configured to implement a corresponding communication function. The transceiver unit 1410 may also be referred to as a communication interface or a communication unit.

Optionally, the apparatus 1400 further includes a processing unit 1420. The processing unit 1420 may be configured to process data.

Optionally, the apparatus 1400 further includes a storage unit. The storage unit may be configured to store instructions and/or data. The processing unit 1420 may read the instructions and/or the data in the storage unit, to enable the apparatus to implement actions performed by the terminal device or the network device in the foregoing method embodiments.

In a design, the apparatus 1400 may be the terminal device in the foregoing embodiments, or may be a component (for example, a chip, a chip system, a processor, or a circuit) of the terminal device. The apparatus 1400 may implement corresponding steps or procedures performed by the terminal device in the foregoing method embodiments. The transceiver unit 1410 may be configured to perform operations related to sending and receiving of the terminal device in the foregoing method embodiments. The processing unit 1420 may be configured to perform a processing-related operation of the terminal device in the foregoing method embodiments.

The apparatus 1400 may implement the steps or the procedures performed by the terminal device in the method embodiments according to embodiments of this application. The apparatus 1400 may include a unit configured to perform the method performed by the terminal device in the embodiment shown in FIG. 6, FIG. 12, or FIG. 13.

In a possible implementation, the transceiver unit 1410 is configured to receive first resource configuration information from a network device, where the first resource configuration information indicates a first time domain resource of a low power wake up signal LP-WUS, and the LP-WUS is used to wake up the terminal device. The transceiver unit 1410 is further configured to receive the LP-WUS from the network device on all or a part of the first time domain resource.

Optionally, the first resource configuration information indicates a periodicity of the first time domain resource and a time domain position of the first time domain resource in the periodicity.

Optionally, the time domain position includes a start position of the first time domain resource.

Optionally, the first resource configuration information further indicates a length of the first time domain resource.

Optionally, the time domain position is indicated by using a bitmap, and a granularity of the first time domain resource indicated by the bitmap is any one of the following: a time domain symbol, a slot, a frame, a subframe, a time domain symbol group, a slot group, a frame group, or a subframe group, where the time domain symbol group includes at least two time domain symbols, the slot group includes at least two slots, the frame group includes at least two frames, and the subframe group includes at least two subframes.

Optionally, the first time domain resource is a time domain resource of at least one of the following: a synchronization signal and physical broadcast channel block SSB, a control resource set CORESET 0, or a tracking reference signal TRS.

Optionally, the transceiver unit 1410 is further configured to receive second resource configuration information from the network device, where the second resource configuration information indicates a first quantity and/or a length of a second time domain resource, the first quantity is used to determine a start position of the second time domain resource, and the second time domain resource is a part of the first time domain resource. The transceiver unit 1410 is specifically configured to receive the LP-WUS from the network device on the second time domain resource.

Optionally, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

Optionally, the processing unit 1420 is configured to determine a valid resource set of the first time domain resource. The transceiver unit 1410 is further configured to receive third resource configuration information from the network device, where the third resource configuration information indicates a second quantity and/or a length of a third time domain resource in the valid resource set, the second quantity is used to determine a start position of the third time domain resource, and the third time domain resource corresponds to a second time domain resource in the first time domain resource. The transceiver unit 1410 is specifically configured to receive the LP-WUS from the network device on the second time domain resource.

Optionally, the second quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

Optionally, the transceiver unit 1410 is further configured to receive fourth resource configuration information from the network device, where the fourth resource configuration information indicates an offset value list, and the offset value list includes at least one offset value, or the fourth resource configuration information indicates an offset value list and a length of a second time domain resource, the offset value list includes a first offset value, the first offset value is used to determine a start position of the second time domain resource, and the second time domain resource is a part of the first time domain resource. The transceiver unit 1410 is specifically configured to receive the LP-WUS from the network device on the second time domain resource.

In another possible implementation, the transceiver unit 1410 is configured to receive fifth resource configuration information from a network device, where the fifth resource configuration information indicates a first quantity, and a length and a periodicity of a second time domain resource, and the first quantity is used to determine a start position of the second time domain resource. The transceiver unit 1410 is further configured to receive an LP-WUS from the network device on the second time domain resource, where the LP-WUS is used to wake up the terminal device.

Optionally, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

In still another possible implementation, the transceiver unit 1410 is configured to receive sixth resource configuration information from a network device, where the sixth resource configuration information indicates a periodicity and an offset value list of a second time domain resource, the offset value list includes at least one offset value, the offset value list includes a first offset value, and the first offset value is used to determine a start position of the second time domain resource. The transceiver unit 1410 is further configured to receive an LP-WUS from the network device on the second time domain resource, where the LP-WUS is used to wake up the terminal device.

Optionally, the sixth resource configuration information further indicates a length of the second time domain resource.

In a design, the apparatus 1400 may be the network device in the foregoing embodiments, or may be a component (for example, a chip, a chip system, a processor, or a circuit) of the network device. The apparatus 1400 may implement corresponding steps or procedures performed by the network device in the foregoing method embodiments. The transceiver unit 1410 may be configured to perform operations related to sending and receiving of the network device in the foregoing method embodiments. The processing unit 1420 may be configured to perform a processing-related operation of the network device in the foregoing method embodiments.

The apparatus 1400 may implement the steps or the procedures performed by the network device in the method embodiments according to embodiments of this application. The apparatus 1400 may include a unit configured to perform the method performed by the network device in the embodiment shown in FIG. 6, FIG. 12, or FIG. 13.

In a possible implementation, the transceiver unit 1410 is configured to send first resource configuration information to a terminal device, where the first resource configuration information indicates a first time domain resource of an LP-WUS, and the LP-WUS is used to wake up the terminal device. The transceiver unit 1410 is further configured to send the LP-WUS to the terminal device on all or a part of the first time domain resource.

Optionally, the first resource configuration information indicates a periodicity of the first time domain resource and a time domain position of the first time domain resource in the periodicity.

Optionally, the time domain position includes a start position of the first time domain resource.

Optionally, the first resource configuration information further indicates a length of the first time domain resource.

Optionally, the time domain position is indicated by using a bitmap, and a granularity of the first time domain resource indicated by the bitmap is any one of the following: a time domain symbol, a slot, a frame, a subframe, a time domain symbol group, a slot group, a frame group, or a subframe group, where the time domain symbol group includes at least two time domain symbols, the slot group includes at least two slots, the frame group includes at least two frames, and the subframe group includes at least two subframes.

Optionally, the first time domain resource is a time domain resource of at least one of the following: an SSB, a CORESET 0, or a TRS.

Optionally, the transceiver unit 1410 is further configured to send second resource configuration information to the terminal device, where the second resource configuration information indicates a first quantity and/or a length of a second time domain resource, the first quantity is used to determine a start position of the second time domain resource, and the second time domain resource is a part of the first time domain resource. The transceiver unit 1410 is specifically configured to send the LP-WUS to the terminal device on the second time domain resource.

Optionally, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

Optionally, the processing unit 1420 is configured to determine a valid resource set of the first time domain resource. The transceiver unit 1410 is further configured to send third resource configuration information to the terminal device, where the third resource configuration indicates a second quantity and/or a length of a third time domain resource in the valid resource set, the second quantity is used to determine a start position of the third time domain resource, and the third time domain resource corresponds to a second time domain resource in the first time domain resource. The transceiver unit 1410 is specifically configured to send the LP-WUS to the terminal device on the second time domain resource.

Optionally, the second quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

Optionally, the transceiver unit 1410 is further configured to send fourth resource configuration information to the terminal device, where the fourth resource configuration information indicates an offset value list, and the offset value list includes at least one offset value, or the fourth resource configuration information indicates an offset value list and a length of a second time domain resource, the offset value list includes a first offset value, the first offset value is used to determine a start position of the second time domain resource, and the second time domain resource is a part of the first time domain resource. The transceiver unit 1410 is specifically configured to send the LP-WUS to the terminal device on the second time domain resource.

In another possible implementation, the transceiver unit 1410 is configured to send fifth resource configuration information to a terminal device, where the fifth resource configuration information indicates a first quantity, and a length and a periodicity of a second time domain resource, and the first quantity is used to determine a start position of the second time domain resource. The transceiver unit 1410 is further configured to send an LP-WUS to the terminal device on the second time domain resource, where the LP-WUS is used to wake up the terminal device.

Optionally, the first quantity is any one of the following: a quantity of terminal devices; a quantity of time domain positions at which a terminal device monitors an LP-WUS; a quantity of intervals in which a terminal device monitors an LP-WUS; or a quantity of terminal device groups, where the terminal device group includes at least one terminal device, and the terminal device belongs to one of the terminal device groups.

In still another possible implementation, the transceiver unit 1410 is configured to send sixth resource configuration information to a terminal device, where the sixth resource configuration information indicates a periodicity and an offset value list of a second time domain resource, the offset value list includes at least one offset value, the offset value list includes a first offset value, and the first offset value is used to determine a start position of the second time domain resource. The transceiver unit 1410 is further configured to send an LP-WUS to the terminal device on the second time domain resource, where the LP-WUS is used to wake up the terminal device.

Optionally, the sixth resource configuration information further indicates a length of the second time domain resource.

FIG. 15 is a diagram of a structure of a communication apparatus 1500 according to an embodiment of this application. The apparatus 1500 includes a processor 1510. The processor 1510 is coupled to a memory 1520. The memory 1520 is configured to store a computer program or instructions and/or data. The processor 1510 is configured to: execute the computer program or the instructions stored in the memory 1520, or read the data stored in the memory 1520, to perform the method in the foregoing method embodiments.

In some embodiments, there are one or more processors 1510.

In some embodiments, there are one or more memories 1520.

In some embodiments, the memory 1520 and the processor 1510 are integrated together, or are disposed separately.

In some embodiments, as shown in FIG. 15, the apparatus 1500 further includes a transceiver 1530. The transceiver 1530 is configured to send and/or receive a signal. For example, the processor 1510 is configured to control the transceiver 1530 to receive and/or send the signal.

In a solution, the apparatus 1500 is configured to implement operations performed by the terminal device in the foregoing method embodiments.

In another solution, the apparatus 1500 is configured to implement operations performed by the network device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions for implementing the method performed by the terminal device or computer instructions for implementing the method performed by the network device in the foregoing method embodiments.

An embodiment of this application further provides a computer program product, including instructions. When the instructions are executed by a computer, the method performed by the terminal device or the method performed by the network device in the foregoing method embodiments is implemented.

An embodiment of this application further provides a communication system. The communication system includes a terminal device and a network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first resource configuration information from a network device, wherein the first resource configuration information indicates a first time domain resource of a low power wake up signal LP-WUS, and the LP-WUS is used to wake up the terminal device; and
receiving, by the terminal device, the LP-WUS from the network device on all or a part of the first time domain resource.

2. The method according to claim 1, wherein the first resource configuration information indicates a periodicity of the first time domain resource and a time domain position of the first time domain resource in the periodicity.

3. The method according to claim 2, wherein the time domain position comprises a start position of the first time domain resource.

4. The method according to claim 3, wherein the first resource configuration information further indicates a length of the first time domain resource.

5. The method according to claim 2, wherein the time domain position is indicated by using a bitmap, and a granularity of the first time domain resource indicated by the bitmap is any one of the following:
a time domain symbol, a slot, a frame, a subframe, a time domain symbol group, a slot group, a frame group, or a subframe group, wherein the time domain symbol group comprises at least two time domain symbols, the slot group comprises at least two slots, the frame group comprises at least two frames, and the subframe group comprises at least two subframes.

6. The method according to claim 1, wherein the first time domain resource is a time domain resource of at least one of the following:
a synchronization signal and physical broadcast channel block SSB, a control resource set CORESET 0, or a tracking reference signal TRS.

7. The method according to any one of claims 1 to 4, wherein
the method further comprises:
receiving, by the terminal device, second resource configuration information from the network device, wherein the second resource configuration information indicates a first quantity and/or a length of a second time domain resource, the first quantity is used to determine a start position of the second time domain resource, and the second time domain resource is a part of the first time domain resource; and
the receiving, by the terminal device, the LP-WUS from the network device on all or a part of the first time domain resource comprises:
receiving, by the terminal device, the LP-WUS from the network device on the second time domain resource.

8. The method according to any one of claims 1 to 6, wherein
the method further comprises:
determining, by the terminal device, a valid resource set of the first time domain resource; and
receiving, by the terminal device, third resource configuration information from the network device, wherein the third resource configuration information indicates a second quantity and/or a length of a third time domain resource in the valid resource set, the second quantity is used to determine a start position of the third time domain resource, and the third time domain resource corresponds to a second time domain resource in the first time domain resource; and
the receiving, by the terminal device, the LP-WUS from the network device on all or a part of the first time domain resource comprises:
receiving, by the terminal device, the LP-WUS from the network device on the second time domain resource.

9. The method according to claim 7, wherein the first quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

10. The method according to claim 8, wherein the second quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

11. The method according to any one of claims 1 to 6, wherein
the method further comprises:
receiving, by the terminal device, fourth resource configuration information from the network device, wherein the fourth resource configuration information indicates an offset value list, or the fourth resource configuration information indicates an offset value list and a length of a second time domain resource, the offset value list comprises at least one offset value, the offset value list comprises a first offset value, the first offset value is used to determine a start position of the second time domain resource, and the second time domain resource is a part of the first time domain resource; and
the receiving, by the terminal device, the LP-WUS from the network device on all or a part of the first time domain resource comprises:
receiving, by the terminal device, the LP-WUS from the network device on the second time domain resource.

12. A communication method, comprising:
receiving, by a terminal device, fifth resource configuration information from a network device, wherein the fifth resource configuration information indicates a first quantity, and a length and a periodicity of a second time domain resource, and the first quantity is used to determine a start position of the second time domain resource; and
receiving, by the terminal device, an LP-WUS from the network device on the second time domain resource, wherein the LP-WUS is used to wake up the terminal device.

13. The method according to claim 12, wherein the first quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

14. A communication method, comprising:
receiving, by a terminal device, sixth resource configuration information from a network device, wherein the sixth resource configuration information indicates a periodicity and an offset value list of a second time domain resource, the offset value list comprises at least one offset value, the offset value list comprises a first offset value, and the first offset value is used to determine a start position of the second time domain resource; and
receiving, by the terminal device, an LP-WUS from the network device on the second time domain resource, wherein the LP-WUS is used to wake up the terminal device.

15. The method according to claim 14, wherein the sixth resource configuration information further indicates a length of the second time domain resource.

16. A communication method, comprising:
sending, by a network device, first resource configuration information to a terminal device, wherein the first resource configuration information indicates a first time domain resource of a low power wake up signal LP-WUS, and the LP-WUS is used to wake up the terminal device; and
sending, by the network device, the LP-WUS to the terminal device on all or a part of the first time domain resource.

17. The method according to claim 16, wherein the first resource configuration information indicates a periodicity of the first time domain resource and a time domain position of the first time domain resource in the periodicity.

18. The method according to claim 17, wherein the time domain position comprises a start position of the first time domain resource.

19. The method according to claim 18, wherein the first resource configuration information further indicates a length of the first time domain resource.

20. The method according to claim 17, wherein the time domain position is indicated by using a bitmap, and a granularity of the first time domain resource indicated by the bitmap is any one of the following:
a time domain symbol, a slot, a frame, a subframe, a time domain symbol group, a slot group, a frame group, or a subframe group, wherein the time domain symbol group comprises at least two time domain symbols, the slot group comprises at least two slots, the frame group comprises at least two frames, and the subframe group comprises at least two subframes.

21. The method according to claim 16, wherein the first time domain resource is a time domain resource of at least one of the following:
a synchronization signal and physical broadcast channel block SSB, a control resource set CORESET 0, or a tracking reference signal TRS.

22. The method according to any one of claims 16 to 19, wherein
the method further comprises:
sending, by the network device, second resource configuration information to the terminal device, wherein the second resource configuration information indicates a first quantity and/or a length of a second time domain resource, the first quantity is used to determine a start position of the second time domain resource, and the second time domain resource is a part of the first time domain resource; and
the sending, by the network device, the LP-WUS to the terminal device on all or a part of the first time domain resource comprises:
sending, by the network device, the LP-WUS to the terminal device on the second time domain resource.

23. The method according to any one of claims 16 to 21, wherein
the method further comprises:
determining, by the network device, a valid resource set of the first time domain resource; and
sending, by the network device, third resource configuration information to the terminal device, wherein the third resource configuration indicates a second quantity and/or a length of a third time domain resource in the valid resource set, the second quantity is used to determine a start position of the third time domain resource, and the third time domain resource corresponds to a second time domain resource in the first time domain resource; and
the sending, by the network device, the LP-WUS to the terminal device on all or a part of the first time domain resource comprises:
sending, by the network device, the LP-WUS to the terminal device on the second time domain resource.

24. The method according to claim 22, wherein the first quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

25. The method according to claim 23, wherein the second quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

26. The method according to any one of claims 16 to 21, wherein
the method further comprises:
sending, by the network device, fourth resource configuration information to the terminal device, wherein the fourth resource configuration information indicates an offset value list, or the fourth resource configuration information indicates an offset value list and a length of a second time domain resource, the offset value list comprises at least one offset value, the offset value list comprises a first offset value, the first offset value is used to determine a start position of the second time domain resource, and the second time domain resource is a part of the first time domain resource; and
the sending, by the network device, the LP-WUS to the terminal device on all or a part of the first time domain resource comprises:
sending, by the network device, the LP-WUS to the terminal device on the second time domain resource.

27. A communication method, comprising:
sending, by a network device, fifth resource configuration information to a terminal device, wherein the fifth resource configuration information indicates a first quantity, and a length and a periodicity of a second time domain resource, and the first quantity is used to determine a start position of the second time domain resource; and
sending, by the network device, an LP-WUS to the terminal device on the second time domain resource, wherein the LP-WUS is used to wake up the terminal device.

28. The method according to claim 27, wherein the first quantity is any one of the following:
a quantity of terminal devices;
a quantity of time domain positions at which a terminal device monitors an LP-WUS;
a quantity of intervals in which a terminal device monitors an LP-WUS; or
a quantity of terminal device groups, wherein the terminal device group comprises at least one terminal device, and the terminal device belongs to one of the terminal device groups.

29. A communication method, comprising:
sending, by a network device, sixth resource configuration information to a terminal device, wherein the sixth resource configuration information indicates a periodicity and an offset value list of a second time domain resource, the offset value list comprises at least one offset value, the offset value list comprises a first offset value, and the first offset value is used to determine a start position of the second time domain resource; and
sending, by the network device, an LP-WUS to the terminal device on the second time domain resource, wherein the LP-WUS is used to wake up the terminal device.

30. The method according to claim 29, wherein the sixth resource configuration information further indicates a length of the second time domain resource.

31. A communication apparatus, comprising a unit or a module configured to perform the method according to any one of claims 1 to 15, or a unit or a module configured to perform the method according to any one of claims 16 to 30.

32. A communication apparatus, comprising at least one processor, wherein the at least one processor is configured to execute a computer program stored in a memory, to enable the apparatus to perform either of the following:
the method according to any one of claims 1 to 15, and the method according to any one of claims 16 to 30.

33. The apparatus according to claim 32, wherein the apparatus further comprises the memory and/or a communication interface, and the communication interface is coupled to the processor; and
the communication interface is configured to input and/or output information.

34. A communication system, comprising a first communication device and a second communication device, wherein the first communication device is configured to perform the method according to any one of claims 1 to 15, or is configured to perform the method according to any one of claims 16 to 30.

35. A computer-readable storage medium, comprising a computer program, wherein
when the computer program is run on a computer, the computer is enabled to perform the method according to any one of claims 1 to 15; or
when the computer program is run on a computer, the computer is enabled to perform the method according to any one of claims 16 to 30.

36. A computer program product, wherein the computer program product comprises computer program code, wherein
when the computer program code is run on a computer, the computer is enabled to implement the method according to any one of claims 1 to 15; or
when the computer program code is run on a computer, the computer is enabled to implement the method according to any one of claims 16 to 30.
